# EUROPÄISCHE PATENTSCHRIFT

(11) **EP 1 587 711 B1**
(45) Veröffentlichungstag und Bekanntmachung des Hinweises auf die Patenterteilung: **14.11.2007**
(21) Anmeldenummer: 03788871.6
(22) Anmeldetag: 10.12.2003
(51) Int. Cl.: B60Q 3/04

(54) **KOMBIINSTRUMENT**
COMBINED INSTRUMENT
INSTRUMENT COMBINE

(30) Priorität: 28.01.2003 DE 10303308
(43) Veröffentlichungstag der Anmeldung: 26.10.2005
(73) Patentinhaber: Siemens VDO Automotive AG, 93055 Regensburg (DE)
(72) Erfinder: STEIERT, Michael, 78050 Villingen-Schwenningen (DE)
(86) Internationale Anmeldenummer: PCT/DE2003/004065
(87) Internationale Veröffentlichungsnummer: WO 2004/067321

(56) Entgegenhaltungen:
- DE-A- 19 800 389
- FR-A- 2 761 029
- FR-A- 2 779 683
- GB-A- 1 522 542
- US-B1- 6 499 852
- PATENT ABSTRACTS OF JAPAN Bd. 1998, Nr. 14, 31. Dezember 1998 (1998-12-31) & JP 10 260063 A (YAZAKI CORP), 29. September 1998 (1998-09-29)

## Beschreibung

Die vorliegende Erfindung betrifft ein Kombiinstrument mit einer Leiterplatte, auf der eine Lichtquelle vorgesehen ist, zur Erzeugung von Licht für eine Anzeigebeleuchtung und einem Rahmen, in den die Leiterplatte aufgenommen ist.

Derartige Kombiinstrumente, die im Armaturenbrett eines Fahrzeuges im Sichtbereich des Fahrers angebracht sind, sind aus Kraftfahrzeugen bekannt. Sie weisen in der Regel eine Vielzahl von Anzeigefeldern auf, die in einem gemeinsamen Kunststoffgehäuse untergebracht sind und vom Fahrer durch eine transparente Abdeckung ablesbar sind. Bei diesen Kombiinstrumenten sind sowohl digitale als auch analoge Anzeigefelder vorgesehen, die dem Fahrer vielfältige Informationen, wie beispielsweise Geschwindigkeit des Fahrzeuges, Drehzahl des Motors oder Tankfüllgrad anzeigen.

Allen Anzeigefeldern gemeinsam ist ein auf dem Anzeigefeld angeordnetes Ziffern- oder Symbolblatt, das die zur Identifikation erforderlichen Leuchtsymbole trägt. Das Ziffernblatt ist in der Regel eine separate Scheibe aus nicht leuchtendem Material, auf welcher ein entsprechender Aufdruck für die einzelnen anzuzeigenden Größen aufgebracht ist. Die Anzeigefelder werden definiert beabstandet auf einer eine Schaltungsanordnung und Licht emittierende Lichtquellen aufweisende Leiterplatte angeordnet und von einem eine transparente Scheibe aufweisenden Rahmen umschlossen. Anordnung und Anzahl der zu verwendenden Anzeigefelder bestimmen die Anzahl und Position der auf der Leiterplatte anzuordnenden Lichtquellen.

Üblicherweise werden hierzu die Lichtquellen hinter der gesamten auszuleuchtenden Fläche verteilt, um eine möglichst gleichmäßige Leuchtstärke und Leuchtdichteverteilung der Anzeigefelder zu gewährleisten. Einsparungen in Bezug auf die Anzahl der Licht emittierenden Lichtquellen erfordern den Einsatz besonderer Lichtleiter mit Lichtkanälen, die beispielsweise das emittierende Licht entlang einer longitudinalen Richtung führen und zum Beispiel die Skalenstriche eines zu beleuchtenden Ziffernblattes hinterleuchten. Somit entspricht die Größe der Leiterplatte in der Regel der Fläche der auszuleuchtenden Anzeigefelder und zieht somit einen hohen Preis und hohe Fertigungskosten mit sich.

Die Anzeigefelder sind auf einem Reflektor angeordnet und weisen einen definierten Abstand zur Leiterplatte auf. Dies bedingt eine festgelegte Bauhöhe des Kombiinstrumentes und somit eine erforderliche Mindesteinbautiefe in einem Armaturenbrett.

In der US 6499852 B1 ist eine Beleuchtungsvorrichtung für ein Kombiinstrument offenbart, bei der mehrere Lichtquellen auf einer Leiterplatte angeordnet sind. Die Leiterplatte ist am äußeren Umfang des Anzeigefeldes auf diesem angeordnet und die Lichtquellen sind entlang des Umfangs des Anzeigefeldes verteilt. Ein Reflektor, der entlang des äußeren Umfangs des Anzeigefeldes angeordnet ist, reflektiert das Licht der Lichtquellen in Richtung der Mitte des Anzeigefeldes.

In der FR 2761029 A1 ist ein Kombiinstrument für Kraftfahrzeuge offenbart, bei dem das Anzeigefeld durch eine Platte gebildet ist, die als Lichtleiter ausgebildet ist. Eine auf einer Leiterplatte angeordnete Lichtquelle strahlt Licht in einen Lichtleiter, der so ausgebildet ist, dass das Licht umgelenkt und in das Anzeigefeld eingekoppelt wird.

In der DE 19800389 A1 ist ein Armaturenbrett mit Beleuchtung von der Vorderseite offenbart, das eine Leiterplatte umfasst, auf die auf einer nach hinten weisenden Seite Leiterbahnen aufgedruckt sind und auf die auf einer nach vorne weisenden Seite eine Schicht serigraphisch aufgebracht ist, die Anzeigezeichen, insbesondere die Skala eines Ziffernblatts, erkennen lässt. Die Leiterplatte ist in einem Rahmen befestigt, in dem ein Schlitz ausgebildet ist, in dem Beleuchtungsmittel angeordnet sind, die das Ziffernblatt von der Vorderseite beleuchten. Die Versorgung der Beleuchtungsmittel erfolgt mit Hilfe einer flexiblen, nachgiebigen Schaltung.

Aufgabe der vorliegenden Erfindung ist es ein Kombiinstrument vorzusehen, welches eine geringe Bauhöhe aufweist, einen einfachen Aufbau aufweist und kostengünstig herzustellen ist und dessen Anzeigefelder mit einer homogenen Beleuchtungsstärkenverteilung beleuchtet werden.

Die Aufgabe wird erfindungsgemäß dadurch gelöst, dass ein Anzeigefeld auf einer der Lichtquelle zugewandten Seite der Leiterplatte unmittelbar auf der Leiterplatte angeordnet ist und ein Lichtleiter vorgesehen ist, der in dem Rahmen in einem der Leiterplatte angrenzenden Bereich aufgenommen ist und der Lichtleiter derart angeordnet ist, dass von der Lichtquelle emittierendes Licht in den Lichtleiter eingespeist und auf das Anzeigefeld abgestrahlt wird.

Dies hat den Vorteil, dass eine Hinterleuchtung der einzelnen Anzeigefelder nicht mehr benötigt wird, da aufgrund der Anordnung der Lichtquellen und der die Lichtquellen umgebenden Lichtleiter das emittierende Licht dergestalt ausgeben wird, dass eine Ausleuchtung der Anzeigefelder von vorne, das heißt der dem Betrachter zugewandten Seite, erfolgt. Dies hat eine wesentliche Reduzierung der Anzahl der Lichtquellen und Lichtkanäle zur Folge. Somit kann eine einseitig bestückte Leiterplatte vorgesehen werden, die es ermöglicht, das Anzeigefeld direkt auf der Leiterplatte anzuordnen. Da für die Anzeigefelder keine Hintergrundbeleuchtung vorzusehen ist, müssen die Anzeigefelder nicht mehr beabstandet zur Leiterplatte angeordnet sein, so dass die Bauhöhe des Kombiinstrumentes wesentlich reduziert werden kann.

Das Aufbringen des Anzeigefeldes in Form beispielsweise eines Ziffernblattes unmittelbar auf der Leiterplatte führt dazu, dass die üblichen Befestigungsmittel zur Arretierung der Anzeigefelder entfallen und eingespart werden.

In vorteilhafter Weise wird ein Ziffernblatt auf die Leiterplatte aufgeklebt oder ein Ziffernblatt in einem Druckverfahren aufgebracht. Auf einfache Weise können Ziffern zur besseren Unterscheidung in verschiedenen Farben gestaltet sein.

Der Rahmen weist an dem der Leiterplatte zugewandte Ende Lichtleiter mit einer Ein- und Auskoppelfläche auf, wobei der Lichtleiter das Licht zwischen der Ein- und Auskoppelfläche umlenkt. In vorteilhafter Weise bildet das Ende des Lichtleiters, welches die Lichtquelle zumindest teilweise umschließt, die Einkoppelfläche des emittierenden Lichts und leitet das Licht im notwendigen Winkel zur Auskoppelfläche, an der das Licht ausgegeben wird und die auf der Leiterplatte angeordneten Anzeigefelder beleuchtet. Hierbei kann die Auskoppelfläche ein Vielfaches der Einkoppelfläche betragen. Die Auskoppelfläche des Lichtleiters kann sich über größere Bereiche erstrecken, so dass aus der Sicht des Anzeigefeldes, abhängig vom Abstrahlwinkel der Lichtquelle und/oder der Geometrie der Auskoppelfläche, verschiedene Ausleuchtungen, beispielsweise punktförmige, streifenförmige oder flächige Ausleuchtungen, möglich sind.

Ein besonderer Kostenvorteil ergibt sich aufgrund der einstückigen Herstellung, zum Beispiel im Zwei-Komponenten Spritzguss-Verfahren, des Rahmens und des Lichtleiters.

Nachfolgend wird die Erfindung anhand des in den Figuren dargestellten Ausführungsbeispiels näher erläutert. Gleiche oder sich entsprechende Elemente in verschiedenen Figuren sind mit gleichen Bezugszeichen versehen.

Es zeigen:
- Figur 1: ein Ausführungsbeispiel des erfindungsgemäßen Kombiinstruments,
- Figur 2: eine Schnittdarstellung A-A des in der Figur 1 dargestellten Kombiinstruments und
- Figur 3: eine weitere Schnittdarstellung des in der Figur 1 dargestellten Kombiinstruments.

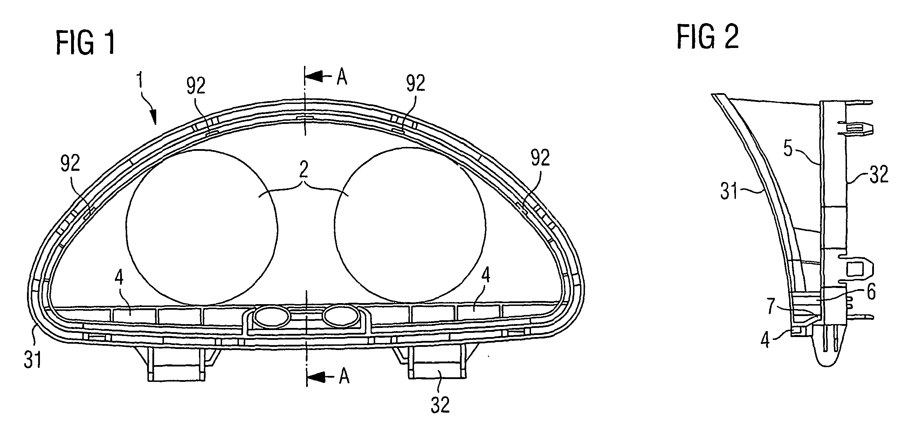

Figur 1 zeigt eine Aufsicht auf das erfindungsgemäße Kombiinstrument 1. Das Kombiinstrument 1 umfasst einen Rahmen 31 und eine Gehäuserückwand 32 und umschließt zwei Anzeigefelder 2 und unterhalb der Anzeigefelder 2 angeordnete Warnfelder 4.

Im Außenbereich an der Innenwand des Rahmens 31 sind Auskoppelflächen 92 von hier nicht dargestellten Lichtleitern 9 sichtbar, wobei das aus diesen Auskoppelflächen 92 emittierende Licht vom Rahmen 31 ausgehend eine gleichmäßige Ausleuchtung der Anzeigefelder 2 bewirkt.

Wie aus der Schnittdarstellung A-A der Figur 2 des in Figur 1 dargestellten Kombiinstrumentes 1 ersichtlich, können in das Kombiinstrument 1 Warnfelder 4 integriert werden, die eine herkömmliche Hintergrundbeleuchtung erforderlich machen. Ein Kombiinstrument 1 weist in der Regel einzelne Warnfelder 4 auf, zum Beispiel zur Anzeige von Blinkern, Warnblinkanlagen oder Lichtstatus, die den Fahrer über normale oder außergewöhnliche Betriebszustände informieren. Die Beleuchtung dieser Warnfelder 4 wird ermöglicht durch weitere auf einer Leiterplatte 5 angeordnete LEDs 7, deren emittierendes Licht über rückseitig am Rahmen 31 des Kombiinstrumentes 1 angeordnete Lichtleiter 6 an die dem Betrachter zugewandte Seite des Rahmens 31 des Kombiinstrumentes 1 geführt wird, auf dem an entsprechender Stelle ein Aufdruck des Warnfeldes 4 angebracht ist.

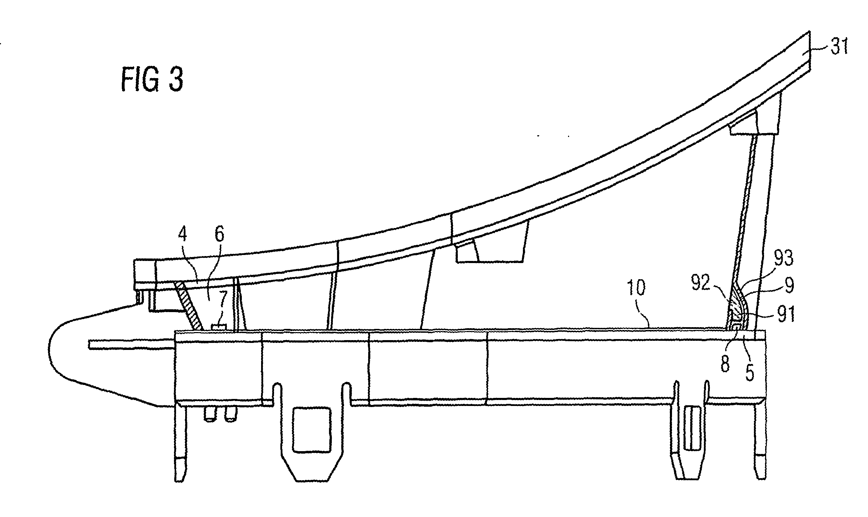

In der Figur 3 ist eine weitere Schnittdarstellung durch das in Figur 1 gezeigte Kombiinstrument 1 dargestellt. Auf der Gehäuserückwand 32 des Kombiinstrumentes1 ist die Leiterplatte 5 angeordnet. Unmittelbar auf der Leiterplatte 5 befindet sich ein Ziffernblatt 10, welches auf die Leiterplatte 5 aufgeklebt wurde oder im Druckverfahren auf die Leiterplatte 5 aufgebracht wurde. Im Außenbereich der Leiterplatte 5 ist eine Licht emittierende Lichtquelle 8, vorzugsweise eine LED, montiert. Der Rahmen 31 umschließt die Leiterplatte 5 und auf der Leiterplatte 5 angeordnete Bauteile. Ein Ende des Rahmens 31 weist einen Lichtleiter 9 auf, wobei das Ende des Lichtleiters 9 die auf der Leiterplatte angeordnete LED 8 umschließt und als Einkoppelfläche 91 für das emittierende Licht dient. In diesem Ausführungsbeispiel wird das emittierende Licht im Lichtleiter 9 um einen 90° Winkel umgelenkt, so dass das Licht aus der Auskoppelfläche 92 parallel zu den Anzeigefeldern 2 austritt und die Fläche der Anzeigefelder 2 homogen ausleuchtet. Der Umlenkwinkel kann jedoch beliebig ausgerichtet werden, so dass je nach Anforderung die Einspeisung des Lichts nicht parallel zum Anzeigefeld 2 erfolgen muss. Da das Licht an der äußeren Innenseite 93 des Lichtleiters 9 reflektiert werden kann, kann aufgrund einer frei dimensionierbaren geometrischen Form des Lichtleiters 9 bestimmt werden, an welcher Stelle und unter welchem Winkel in die Einkoppelfläche 91 eingespeistes Licht an der Auskoppelfläche 92 wieder austritt.

Wie aus der Figur 3 ersichtlich, kann die Bauhöhe des Kombiinstruments 1 aufgrund des Aufbringens der Anzeigefelder 2 unmittelbar auf der Leiterplatte 5 wesentlich verringert werden. Aufgrund der Beleuchtung der Anzeigefelder 2 über im Rahmen 31 angeordnete Auskoppelflächen 92 kann eine homogene Ausleuchtung der Anzeigefelder 2 bewirkt werden. Es werden somit Bauteilkosten zur Befestigung der Anzeigefelder 2 sowie die Bauteilkosten für eine Vielzahl an LEDs 8 und deren notwendige Aufwendungen für die Stromversorgung eingespart.

## Patentansprüche

1. Kombiinstrument (1) mit einer Leiterplatte (5), auf der eine Lichtquelle (8) vorgesehen ist zur Erzeugung von Licht für eine Anzeigebeleuchtung, und einem Rahmen (31), in den die Leiterplatte (5) aufgenommen ist, **dadurch gekennzeichnet, dass** ein Anzeigefeld (2) auf einer der Lichtquelle (8) zugewandten Seite der Leiterplatte (5) unmittelbar auf der Leiterplatte (5) angeordnet ist und ein Lichtleiter (9) vorgesehen ist, der in dem Rahmen (31) in einem der Leiterplatte (5) angrenzenden Bereich aufgenommen ist, und der Lichtleiter (9) derart angeordnet ist, dass von der Lichtquelle (8) emittierendes Licht in den Lichtleiter (9) eingespeist und auf das Anzeigefeld (2) abgestrahlt wird.

2. Kombiinstrument (1) nach Anspruch 1, **dadurch gekennzeichnet, dass** das Anzeigefeld (2) als ein auf der Leiterplatte (5) aufgedrucktes Ziffernblatt (10) ausgebildet ist.

3. Kombiinstrument (1) nach Anspruch 1, **dadurch gekennzeichnet, dass** das Anzeigefeld (2) als ein auf der Leiterplatte aufgeklebtes Ziffernblatt (10) ausgebildet ist.

4. Kombiinstrument (1) nach Anspruch 1, **dadurch gekennzeichnet, dass** der Lichtleiter (9) eine Ein- (91) und Auskoppelfläche (92) aufweist und der Lichtleiter (9) die Lichtquelle (8) auf der Leiterplatte (5) zumindest teilweise umschließt.

5. Kombiinstrument (1) nach Anspruch 1, **dadurch gekennzeichnet, dass** die Lichtquelle (8) eine lichtemittierende Diode oder eine Laserdiode ist, über der der Lichtleiter (9) angeordnet ist und die das emittierende Licht unmittelbar in den Lichtleiter (9) einkoppelt.

6. Kombiinstrument (1) nach Anspruch 1, **dadurch gekennzeichnet, dass** der Lichtleiter (9) das emittierende Licht zwischen Ein- (91) und Auskoppelfläche (92) umlenkt.

7. Kombiinstrument (1) nach Anspruch 1, **dadurch gekennzeichnet, dass** der Lichtleiter (9) einstückig aus Kunststoff mit dem Rahmen (31) hergestellt ist.

8. Kombiinstrument (1) nach Anspruch 7, **dadurch gekennzeichnet, dass** der Rahmen (31) und der Lichtleiter (9) einstückig im Zwei-Komponenten Spritzguss-Verfahren hergestellt sind.

## Claims

1. Instrument cluster (1) having a printed circuit board (5) on which a light source (8) is provided in order to generate light for illuminating a display, and a frame (31) in which the printed circuit board (5) is held, **characterized in that** a display panel (2) is arranged directly on the printed circuit board (5) on a side of the printed circuit board(s) which faces the light source (8), and a light guide (9) is provided that is held in the frame (31) in an area adjoining the printed circuit board (5), and the light guide (9) is arranged in such a way that light emitted by the light source (8) is fed into the light guide (9) and radiated onto the display panel (2).

2. Instrument cluster (1) according to Claim 1, **characterized in that** the display panel (2) is designed as a dial (10) printed on the printed circuit board (5).

3. Instrument cluster (1) according to Claim 1, **characterized in that** the display panel (2) is designed as a dial (10) laundered on the printed circuit board.

4. Instrument cluster (1) according to Claim 1, **characterized in** the light guide (9) has an incoupling surface (91) and an outcoupling surface (92), and the light guide (9) at least partially surrounds the light source (8) on the printed circuit board (5).

5. Instrument cluster (1) according to Claim 1, **characterized in that** the light source (8) is a light-emitting diode or a laser diode above which the light guide (9) is arranged and which couples the emitted light directly into the light guide (9).

6. Instrument cluster (1) according to Claim 1, **characterized in that** the light guide (9) deflects the emitted light between the incoupling surface (91) and outcoupling surface (92).

7. Instrument cluster (1) according to Claim 1, **characterized in that** the light guide (9) is produced from plastic in one piece with the frame (31).

8. Instrument cluster (1) according to Claim 7, **characterized in that** the frame (31) and the light guide (9) are produced in one piece using the two-component injection molding process.

## Revendications

1. Instrument combiné (1) comportant une carte à circuits imprimés (5), sur laquelle est prévue une source lumineuse (8) permettant de produire de la lumière pour un éclairage de l'affichage, et un cadre (31), dans lequel est logée la carte à circuits imprimés (5), **caractérisé par le fait qu'**un champ d'affichage (2) est placé directement sur la carte à circuits imprimés (5) sur une face de la carte à circuits imprimés (5) tournée vers la source lumineuse (8) et qu'il est prévu un guide d'ondes lumineuses (9) qui est logé dans le cadre (31) dans une partie voisine de la carte à circuits imprimés (5) et que le guide d'ondes lumineuses (9) est disposé de telle manière que la lumière émise par la source lumineuse (8) est injectée dans le guide d'ondes lumineuses (9) et rayonne sur le champ d'affichage (2).

2. Instrument combiné (1) selon la revendication 1, **caractérisé par le fait que** le champ d'affichage (2) est conçu sous la forme d'un cadran (10) imprimé sur la carte à circuits imprimés (5).

3. Instrument combiné (1) selon la revendication 1, **caractérisé par le fait que** le champ d'affichage (2) est conçu sous la forme d'un cadran (10) collé sur la carte à circuits imprimés (5).

4. Instrument combiné (1) selon la revendication 1, **caractérisé par le fait que** le guide d'ondes lumineuses (9) a une surface de couplage (91) et une surface de découplage (92) et que le guide d'ondes lumineuses (9) entoure au moins partiellement la source lumineuse (8) sur la carte à circuits imprimés (5).

5. Instrument combiné (1) selon la revendication 1, **caractérisé par le fait que** la source lumineuse (8) est une diode luminescente ou une diode laser, au-dessus de laquelle est disposé le guide d'ondes lumineuses (9) et qui couple la lumière émise directement dans le guide d'ondes lumineuses (9).

6. Instrument combiné (1) selon la revendication 1, **caractérisé par le fait que** le guide d'ondes lumineuses (9) change la direction de la lumière émise entre la surface de couplage (91) et la surface de découplage (92).

7. Instrument combiné (1) selon la revendication 1, **caractérisé par le fait que** le guide d'ondes lumineuses (9) est fabriqué en matière plastique en formant une pièce unique avec le cadre (31).

8. Instrument combiné (1) selon la revendication 7, **caractérisé par le fait que** le cadre (31) et le guide d'ondes lumineuses (9) sont fabriqués sous forme de pièce unique avec un procédé de moulage par injection à deux composantes.
